# EUROPÄISCHE PATENTANMELDUNG

(11) **EP 1 491 265 A2**
(43) Veröffentlichungstag der Anmeldung: **29.12.2004**
(21) Anmeldenummer: 04014540.1
(22) Anmeldetag: 22.06.2004
(51) Int. Cl.: B08B 7/00, C11D 17/00, B02C 18/30

(54) **Verfahren und Reinigungsmasse zur Reinigung von Lochscheiben lebensmittelverarbeitender Maschinen**

(30) Priorität: 27.06.2003 DE 10329122
(71) Anmelder: Hartmann, Franz, 86934 Reichling (DE)
(72) Erfinder: Hartmann, Franz, 86934 Reichling (DE)

(57) **Zusammenfassung**

Die Erfindung betrifft Verfahren sowie die zugehörigen Verdrängungsmassen zur schnelleren und besseren Reinigung von vorwiegend Lochscheiben lebensmittelverarbeitender Maschinen bei einem guten Preis-Leistungsverhältnis für den Anwender. Zur Reinigung wird eine ausreichend plastische, in Wasser vollständig selbsttätig lösliche, lebensmittel-und umweltrechtlich unbedenkliche, biologisch abbaubare Masse insbesondere durch die vorzugsweise arbeitende Maschine, per Hand oder durch eine externe Maschine oder andere Werkzeuge, in die Löcher einer Lochscheibe gepresst. Danach kann insbesondere die Lochscheibe, bedingt durch die problemlose Entfernung der Reinigungsmasse mittels vollständiger, selbsttätiger Auflösung der Masse in Wasser oder temperaturbedingter Auflösung, problemlos per Hand oder Spülmaschine mit oder ohne handelsübliche Zusätzen gereinigt werden.

Der bei der Verdrängung und Reinigung anfallende Überschuss der zur Verdrängung verwendeten Masse und des zuvor verwendeten Materials kann problemlos, auch zusammen, als Bio-, Rest-, oder Hausmüll nach den Richtlinien der Abfallverordnungen (Stand2004) entsorgt werden.

Zudem wird die Reinigung der übrigen Teile der Maschine mit anderen Reinigungsverfahren-und mitteln zumindest teilweise überflüssig.

Selbstverständlich können jedoch, nach dieser Behandlung speziell der Lochscheibe, die übrigen Teile der Maschine mit auch bereits bekannten Methoden, Verfahren und den dafür geeigneten Reinigungsmitteln problemlos gesäubert werden.

## Beschreibung

Die Erfindung betrifft ein Verfahren zum besseren und schnelleren Reinigen von insbesondere Lochscheiben lebensmittelverarbeitender Maschinen gemäß dem

Oberbegriff und dem kennzeichnenden Teil des Anspruches 1, den Ansprüchen 2 mit 12, sowie für das Verfahren geeignete Ausgestaltungen und Verdrängungsmassen, die mittels insbesondere ausreichender Plastizität und Wasserlöslichkeit, Lebensmittelreste in Lochscheiben verdrängen und mittels nachfolgender vollständiger, selbsttätiger Auflösung in Verbindung mit Wasser aus diesen entfernt werden.

### Technischer Hintergrund:

Die Reinigung von Lochscheiben lebensmittelerzeugender Maschinen wie z.B. Fleischwölfen, erfordert einen erheblichen Zeitaufwand und wird teilweise den lebensmittelrechtlichen Anforderungen nicht gerecht, da die Erfahrung zeigt, dass immer wieder, trotz vermeintlich sorgfältiger Reinigung, Rückstände verbleiben. Zum Entfernen des in den Löchern der Scheibe komprimierten Lebensmittels müssen mittels großen Zeit- und Arbeitsaufwandes Hilfsmittel wie z.B. Zahnstocher gebraucht werden.

Auch heftiges Anschlagen gegen feste Gegenstände ist erforderlich ( Verletzungsgefahr! ). Erst danach, d.h. nach vollständiger Entfernung der Lebensmittelreste per Hand, können die Scheiben mittels Wasser und Zusätzen gereinigt werden ( per Hand oder Spülmaschine). Gesamtzeitaufwand mit Spülen:ca. 40-50 Minuten.

### Stand der Technik:

JP 48014705 B4 (1) beschreibt ein Verfahren mit zugehöriger Reinigungsmasse, speziell für Rohrleitungen, wobei die Reinigungsmasse bis zum Austrittsende des Rohres einer Fleischverpackungsmaschine für bereits gehacktes Fleisch befördert wird. Bei dem Verfahren werden polymere (polyacrylic acid), toxische (weil zum Teil monomer), optional zu polyacrylic acid stärkeenthaltende, flüssige (nicht trocknende) Cellulosegele bei Arbeitsende in am Austrittsende offene Rohrleitungen gefüllt, um noch verbliebene Fleischreste zu ersetzen und leichter auswaschen zu können. Eine typische Mischung enthält: 1,5%-40% microcrystalline Cellulose in der Gesamtmasse.

JP 48014704 B4 (3) beschreibt das Verfahren von JP 48014705 B4 unter Verwendung einer Masse, deren Stärkeanteile oder Polyacrylsäure nicht optional, sondern fester Bestandteil derselben sind, wobei die neutralisierten Polyacrylsäuren (0,5%ige Lösung) bei einem pH Wert von 7.2 , 20-80 Anteile haben und die Stärkeanteile (2%ige Lösung) 80-20 in der Gesamtmasse betragen.

### Kommentar zum Stand der Technik:

Diese beschriebenen Verfahren sind nicht geeignet oder beschrieben zur Verdrängung von in Lochscheiben komprimierten Lebensmittelresten, bedingt durch die Zuführungsart (in a pipeline of a meat packer at the end of operation) und die flüssige (wird auch nach Trocknung nicht fest), teilweise toxische Konsistenz der dazu verwendeten Massen.

Selbst bei arbeitender Maschine verbleiben die Massen bei nachgeschalteter Lochscheibe aufgrund ihrer flüssigen Konsistenz bis zur Auswaschung im Rohr, bedingt durch die nicht absolute Dichtigkeit zwischen im Rohr arbeitender Schnecke und Zuführungswand und die eine Austrittsöffnung verschliessende Lochscheibe. Allenfalls wird eine verschwindend geringe Anzahl von Löchern in der Mitte der Scheibe durch höheren Anfangsdruck freigemacht, durch die der Rest des nachgefüllten Gels austritt, ohne die Mehrzahl der übrigen mit komprimiertem Lebensmittel gefüllten Löcher auszufüllen.

Dieses Verfahren, sowie die verwendete Masse, verdrängen noch verbliebene Lebensmittelreste nicht aus den Löchern einer nach dem Austrittsende eines Rohres montierten Lochscheibe und sind dafür auch nicht beschrieben.

Darüberhinaus erscheinen die toxischen Eigenschaften der Gele insbesondere in JP 48014704 lebensmittelrechtlich und umweltbezogen zumindest bedenklich (Kontaminierung zumindest des zur Reinigung verwendeten Wassers) und bedürften eventuell einer erneuten lebensmittelrechtlichen Abklärung (z.B. Hackfleischverordnung).

Die in (1)und (3) beschriebenen Gele mit Stärke- und Celluloseanteilen sind in ihrer Wirkung nicht zu vergleichen (nicht wasserlöslich) mit Feststoffen, deren schnelle Wirkung z.B. auf Zuckerverbindungen ( oder in Verbindung mit Wasser ähnlich reagierenden Stoffen) beruht.

Die beschriebenen Gele sind im Lebensmittelbereich (insbesondere im offenen) aus folgenden Gründen bedenklich:
a) Das Monomere (Acrylsäure) ist entzündlich, gesundheitsschädlich, ätzend, umweltgefährlich (R10-20/21/22-35-50), sowie toxisch (LD 50 Kaninchen 295mg/kg). Die Verwendung von Acrylsäuren ist daher mit gesundheitlichen gefahren verbunden und nur unter Einhaltung von Sicherheitsvorkehrungen möglich. Auch kann nicht ausgeschlossen werden, dass das fertige Polyacrylsäuregel noch Monomere enthält, die vom Anwender z.B. über Hautkontakt aufgenommen werden können und dann zu erheblichen Gesundheitsschäden führen. Beim Auswaschvorgang würde in meinem Anwendungsgebiet und dem dafür vorgesehenen Verfahren Acrylsäure in das Spülwasser Gelangen.
b) Polyacrylsäuregele sind nicht in Wasser löslich. Es besteht die Gefahr, dass Gelreste in der Maschine verbleiben und neu zu verarbeitende Lebensmittel kontaminieren.
c) Die Entsorgung von Acrylsäuren und Polyacrylsäuren als Hausmüll ist problematisch; sie sind einer kostenintensiven Verbrennung zuzuführen.

### Vorteile meiner neuen Erfindung:

Das Verfahren findet vorwiegend unter Verwendung der arbeitenden Maschine statt.

Die Masse wird den lebensmittelrechtlichen Anforderungen gerecht.

Die Masse kann problemlos als Biomüll entsorgt werden.

Die Masse hat eine von den beschriebenen Massen verschiedene, für die Verdrängung in einer Lochscheibe geeignete Konsistenz, ist, im Gegensatz zu diesen, in Wasser vollständig löslich, hat davon verschiedene, eine schnelle Wirkung tragende Substanzen (z.B.:niedermolekulare Zuckerverbindungen) und eine von diesen verschiedene Zusammensetzung, die gesundheitliche Gefährdungen ausschliesst und eine einfache Entsorgung ermöglicht.

Das Verfahren mit zugehörigen Massen erbringt ein besseres Reinigungsergebnis bei einem für den Anwender günstigen Preis-Leistungsverhältnis und eine Zeitersparnis von mindestens 70% im Vergleich zu anderen, bereits bekannten Reinigungsmethoden.

### Darstellung der Erfindung:

### a) Technische Aufgabe

Der Erfindung liegt die Aufgabe zugrunde, den Reinigungsvorgang von insbesondere Lochscheiben lebensmittelerzeugender Maschinen, sowie deren übrigen Teilen ,erheblich zu beschleunigen und zu vereinfachen sowie das Reinigungsergebnis zu verbessern.

### b) Lösung der Aufgabe

Gelöst wird diese Aufgabe gemäß der Erfindung durch die im Oberbegriff und kennzeichnenden Teil des Anspruches 1 und 2 gegebenen und den sich aus den Ansprüchen 3 mit 12 ergebenden Merkmalen. Zweckmässige Ausgestaltungen ergeben sich aus den Unteransprüchen. Eine für das Verfahren geeignete Masse und deren Variationen ergeben sich nach dem Oberbegriff und dem kennzeichnenden Teil des Anspruchs 1 mit 12 und den Unteransprüchen.

### c) Ausführungsbeispiele

Bei dem erfindungsgemäßen Verfahren wird bevorzugt eine nichtflüssige Masse (Feststoff) dem zuvor verarbeiteten Material nachgeführt und vorzugsweise durch die arbeitende Maschine in die Löcher einer Scheibe gepresst. Wie sich aus den Unteransprüchen ergibt, ist eine Verdrängung mittels Temperaturveränderung der variierten Masse durchaus möglich, stellt jedoch eine zu vernachlässigende Variante dar. Das zuvor in der Lochscheibe komprimierte Lebensmittel wird bei vorzugsweise arbeitender Maschine durch die Masse vollständig verdrängt und ersetzt. Nach Beendigung dieses Vorganges wird die zu reinigende Lochscheibe mittels vollständiger selbsttätiger Auflösung der Verdrängungsmasse in Verbindung mit Wasser, mit oder ohne handelsüblichen Zusätzen ( per Hand oder Spülmaschine) gereinigt. Dies ist nur rückstandsfrei möglich durch die vorherig erfolgreiche, vollständige Verdrängung der komprimierten Lebensmittel in der Scheibe bei gleichzeitig vollständiger Wasserlöslichkeit des zur Verdrängung verwendeten Stoffes. Die Reinigung der übrigen Teile einer lebensmittelverarbeitenden Maschine nach bereits bekannten Verfahren und mit bereits bekannten Reinigungsmassen wird in keiner Weise beeinträchtigt, wird im Hinblick auf die Wirkung der erfindungsgemässen Verfahren und Massen zudem jedoch zumindest teilweise überflüssig.

Das Verfahren ist anwendbar auf industrielle wie auch im privaten Haushalt, Handwerksbetrieben wie z.B. Fleischereien, oder der Gastronomie verwendete Lochscheiben lebensmittelverarbeitender Maschinen und deren übrige Teile.

### Gesamtzeitaufwand. mit Spülen:

Ca. 12 Min. (entspricht ca.30% im Vergleich zu mindestens 40 Min. nach bisher bekannten Verfahren und damit mindestens 70% Zeitersparnis bei besserem Reinigungsergebnis).

## Patentansprüche

1. Verfahren zur Reinigung von insbesondere Lochscheiben lebensmittelverarbeitender Maschinen, wobei einem Lebensmittelverarbeitungsvorgang mit arbeitender Maschine dem Lebensmittel eine Masse nachgeführt wird,
**gekennzeichnet dadurch, dass**
man eine Mischung einsetzt, deren Kombination aus in Wasser löslich, ausreichend plastisch (feste Konsistenz), lebensmittelrechtlich und umweltrechtlich unbedenklich, biologisch abbaubar, in Lochscheiben verbliebene Lebensmittel verdrängt und durch vollständige, selbsttätige Auflösung mittels in Verbindung bringen mit Wasser aus der Lochscheibe entfernt wird.

2. Masse zur Verwendung nach Anspruch 1,
**gekennzeichnet dadurch , dass**
diese z.B. folgende Inhaltsstoffe aufweist:
niedermolekulare bis hochmolekulare Zuckerverbindungen
Glukose
Wachse
Salze
Wasser
pectine Füllstoffe
mineralische Hilfsstoffe in geringen Anteilen
kristalline Füllstoffe
Malze
Bindemittel
Gelantine
Proteasen
fettabbauende Lipasen
Molke
Proteine in geringen Anteilen
Cholesterinanteile (tierische oder pflanzliche Fette)
Dextrose
Harze
Kautschuk
Essig
Duftstoffe
Farbstoffe
Natriumchlorid
Emulgatoren
Tenside
Fruchtextrakte
Getreideextrakte
Geschmackstoffe
Planzenmark
Talkum
Chique
Eigelb

3. Masse nach Anspruch 1, 2, und 4 mit 12 mit Stärke- und Celluloseanteilen,
**gekennzeichnet dadurch dass**
Celluloseanteile weniger als 1,5% in der Gesamtmenge betragen oder Celluloseanteile mehr als 40% in der Gesamtmenge betragen oder Stärkeanteile weniger als 20% in der Gesamtmenge betragen und Stärkeanteile mehr als 98,5% in der Gesamtmenge betragen

4. Masse nach Anspruch 1 mit 3 und 5 mit 12
**gekennzeichnet dadurch, dass**
die Masse
duftneutral ist und
farbneutral ist und
geschmacksneutral ist

5. **dadurch gekennzeichnet, dass**
die in den Löchern der Lochscheibe komprimierte Reinigungsmasse nach Anspruch 1 mit 4 und 7 und 10
durch vollständige selbsttätige Auflösung in Verbindung mit Wasser
flüssigem oder
festem oder
gasförmigem
Aggregatzustandes aus den gefüllten Löchern einer Lochscheibe entfernt wird.

6. **dadurch gekennzeichnet, dass**
nach Verwendung der Reinigungsmasse nach Anspruch 1 mit 4 und 7 und 10, diese aus den übrigen Teilen der Maschine entfernt wird, mittels selbsttätiger Auflösung durch in Verbindung bringen mit Wasser
flüssigem Aggregatzustands oder
festem Aggregatzustands oder
gasförmigem Aggregatzustands

7. **dadurch gekennzeichnet, dass**
die zu verwendende Reinigungsmasse nach Anspruch 1 mit 4 und 10 durch Änderung der Zusammensetzung ihrer Komponenten eine flüssige oder gelartige Konsistenz aufweist und zur Verarbeitung, mittels Temperaturveränderung eine feste Konsistenz aufweist.

8. **dadurch gekennzeichnet, dass**
die Masse nach Anspruch 1 mit 4 und 7 und 10 mittels Auflösung durch Temperaturveränderung entfernt wird.

9. **dadurch gekennzeichnet, dass**
die Lebensmittelreste mittels Temperaturveränderung in der Masse verdrängt werden.

10. **gekennzeichnet dadurch, dass**
die Masse nach Anspruch 1 mit 9 und 11 und 12, zum besseren Erkennen der Beendigung des vollständigen Reinigungsvorganges vom Lebensmittel unterschiedlich eingefärbt ist.

11. **gekennzeichnet dadurch, dass**
die Reinigungsmasse nach den Ansprüchen 1 mit 10 und 12 per Hand, eine externe Maschine oder ein anderes Werkzeug mit den zu reinigenden Teilen in Verbindung gebracht wird.

12. **gekennzeichnet dadurch, dass**
die Reinigungsmasse nach den Ansprüchen 1 mit 11 verwendet wird zu anderen
als in den Ansprüchen 1 mit 11 beschriebenen Reinigungszwecken und Reinigungsverfahren
